# EUROPEAN PATENT SPECIFICATION

(11) **EP 2 155 817 B1**
(45) Date of publication and mention of the grant of the patent: **02.11.2011**
(21) Application number: 07833004.0
(22) Date of filing: 13.09.2007
(51) Int. Cl.: C08L 1/02, D01F 2/02, C08K 5/00

(54) **CELLULOSE-BASED YARN, AND METHOD OF PREPARING THE SAME**
AUF CELLULOSE BASIERENDES GARN UND HERSTELLUNGSVERFAHREN DAFÜR
FIL À BASE DE CELLULOSE ET SON PROCÉDÉ DE PRÉPARATION

(30) Priority: 11.06.2007 KR 20070056840
(43) Date of publication of application: 24.02.2010
(73) Proprietor: Kolon Industries Inc., Kyungki-do 427-709 (KR)
(72) Inventor: MOON, Sang-Hyun, Daegu 702-250 (KR); PARK, Hyun-Jung, Dae-gu 703-016 (KR); OH, Young-Se, Busan 616-120 (KR)
(74) Representative: Merkle, Gebhard
(86) International application number: PCT/KR2007/004421
(87) International publication number: WO 2008/153244

(56) References cited:
- GB-A- 434 858
- US-A- 2 359 749
- US-A1- 2006 200 103
- DATABASE WPI Week 200750, Derwent Publications Ltd., London, GB; AN 2007-509472, XP008114394 & JP 2007 077300 A (KAO CORP) 29 March 2007

## Description

### BACKGROUND OF THE INVENTION

### (a) Field of the Invention

The present invention relates to a cellulose fiber, and a method of preparing the same, and more particularly to a cellulose fiber having a superior strength-maintaining rate during a twisting process, and a method of preparing the same.

### (b) Description of the Related Art

Cellulose has a crystalline structure that is constructed by strong hydrogen bonds between molecular chains or the interior of the molecular chain, and thus it is difficult to dissolve the cellulose with a common solvent. Generally, N-methylmorpholine-N-oxide (hereinafter 'NMMO'), which is capable of destroying the crystalline structure, is used as a solvent for dissolving a cellulose.

A process of preparing a cellulose fiber by using a solution, wherein the cellulose is dissolved in the NMMO, has benefits of less energy consumption and less use amount of water, in comparison with general process of preparing polyester and viscose rayon, because the NMMO can be recycled. Furthermore, the process using the NMMO has less problems of air pollution or water pollution, because the NMMO is atoxic and nearly all of the NMMO can be recovered and recycled.

Cellulose fiber has been mainly used as a yarn for clothes owing to its superior tactile impression and hydrophilic property. However, many studies to improve strength of the cellulose fiber have proceeded regarding the possibility of using it as an industrial yarn such as for a tire cord.

A high denier industrial yarn is variously used for common industrial yam, geo-textiles, tire cords, etc., and thus properties such as high strength, high elasticity, fatigue resistance, and size stability are needed for the yam. To obtain the properties, the elongation process and the heat setting process in the manufacturing process of the yarn are important.

In particular, the constituent parts of a spinning oil, which is used in the stretching process and the heat setting process, relate to the friction coefficient of the yam, the workability, and the quality of the yam. Furthermore, the constituent parts of the spinning oil have a potent effect on the ratio of strength maintenance, and more particularly have an effect on workability and working environment as well as on the properties of the yarn of causing fumes and tar during processing.

In the case of industrial yam, a straight type of spinning oil that is used by mixing it with hydrocarbons having low viscosity and that are extracted from petroleum has been primarily used, as opposed to an emulsion type of spinning oil that is used by mixing it with water as a solvent, to control the properties of the yarn such as stretching property and uniform adhesion, and the use of oil produces superior heat conductivity.

Regarding the constituent parts of spinning oil that are used in the manufacturing processes of synthetic fiber, it includes high fatty acid esters and mineral oils for lubricity, emulsifiers such as an fiber bundle collecting agent, an anti-static agent for preventing static electricity, and additives that are demanded for every kind of process, aside from the diluting solvent. Among the above constituent parts, those providing excellent heat stability are required of a lubricant, because the spinning oil of the industrial yarn is treated at high temperatures in many processes.

Recently, high molecular weight polyhydric alcohol esters, which are prepared by reacting fatty acids with polyhydric alcohols having good heat stability, such as glycerin, sorbitan, sorbitol, pentaerythritol, and trimethylpropanol, have largely been used as spinning oils for industrial fibers.

JP 47-29474 discloses a spinning oil diesterified with 2 moles of lauryl acid by adding alkylene oxides to bisphenol-A based alcohols, however it is not preferable due to the emission of smoke.

JP 54-156895 discloses a process including the steps of adding alkylene oxides to bisphenol-A based alcohols, esterifying the same with one mole of fatty acid to prepare a primary synthetic compound having a hydroxyl group on one side thereof, and then further esterifying 2 moles of the primary synthetic compound with 1 mole of adipic acid. However, the synthetic method thereof is complicated and the reaction does not proceed well, and compatibility with other constituent parts of the spinning oil is not good due to the high molecular weight and viscosity of the synthetic compound.

Furthermore, the previously known lubricants are used to improve a friction coefficient of thermoplastic synthetic fibers such as Nylons or polyesters that are spun by a melt-spinning method. However, the component of spinning oil suitable for an industrial cellulose fiber which is hydrophilic and is spun by a solution spinning method is not known yet.

### SUMMARY OF THE INVENTION

It is an aspect of the present invention to provide a cellulose-based yarn having excellent lubricity and durability and having a good strength-maintaining rate during a twisting process.

It is another aspect of the present invention to provide a method of producing the cellulose-based yarn by using a specified spinning oil.

In order to attain these objects, the present invention provides a cellulose-based yarn according to claim 1.

Furthermore, the present invention provides a cellulose based yarn according to claim 1 further comprising an polyoxyalkylene fatty acid ester.

The present invention also provides a cellulose-based yarn according to claim 1 further comprising a polyoxyalkylene C₄-C₂₀ alkyl amino ether.

The present invention further provides a cellulose-based yarn according to claim 1 comprising the cellulose-based fibers; the di-ester compound represented by Chemical Formula 1, the polyoxyalkylene fatty acid ester, and the polyoxyalkylene C₄-C₂₀ alkyl amino ether.

The present invention additionally provides a method of preparing a cellulose-based yarn including the steps of: preparing a dope by mixing a cellulose, water, and N-methylmorpholine-N-oxide; spinning the dope into a precipitating bath, and then washing, and drying it to form fiber, and oiling the fiber with a spinning oil before, during, or after the drying, wherein the spinning oil includes 100 parts by weight of the di-ester compound represented by Chemical Formula 1, 35 to 60 parts by weight of the polyoxyalkylene fatty acid ester, and 10 to 20 parts by weight of the polyoxyalkylene C₄-C₂₀ alkyl amino ether.

### DETAILED DESCRIPTION OF THE PREFERRED EMBODIMENTS

Hereinafter, the present invention is explained in more detail.

The present invention relates to a cellulose-based yarn, particularly to a cellulose-based yarn having a good strength-maintaining rate during a twisting process. The cellulose-based yarn of the present invention is characterized by including a cellulose-based yarn and a fatty acid ester compound.

As an example of the fatty acid ester compound, a di-ester compound represented by the following Chemical Formula 1 is representative, and a polyoxyalkylene fatty acid ester, a polyoxyalkylene C₄-C₂₀ alkyl amino ether, etc., may be included in the fatty acid ester compound of the present invention. 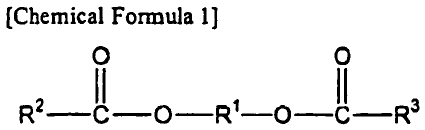 wherein R¹ is a C₂-C₁₄ saturated or unsaturated aliphatic hydrocarbon, and it may be a C₄-C₁₂ alkylene; and R² and R³ are independently a C₈-C₂₀ saturated or unsaturated aliphatic hydrocarbon and they may be a C₈-C₂₀ alkyl or alkenyl.

The fatty acid ester compound is attached to the surface of the cellulose-based fibers, and more preferably the fatty acid ester compound is coated on the surface of the cellulose-based fibers. As the fatty acid ester compound is uniformly spread on the surface of the fibers, the durability and strength-maintaining rate of the yarn are improved.

The first detailed example of the present cellulose-based yarn includes cellulose-based fibers, and the di-ester compound represented by Chemical Formula 1 according to claim 1.

The second detailed example of the present cellulose-based yarn according to claim 1 further comprises a polyoxyalkylene fatty acid ester.

The third detailed example of the present cellulose-based yarn according to claim1 further comprises a polyoxyalkylene C₄-C₂₀ alkyl amino ether.

The fourth detailed example of the present cellulose-based yarn according to claim 1 includes cellulose-based fibers; the di-ester compound represented by Chemical Formula 1, a polyoxyalkylene fatty acid ester, and a polyoxyalkylene C₄-C₂₀ alkyl amino ether.

In the first and fourth detailed examples, the di-ester compound represented by Chemical Formula 1 may be included in an amount of 0.05 parts by weight or more based on 100 parts by weight of the cellulose-based fibers to lessen the friction coefficient and to raise strength-maintaining rate, and it may be included in an amount of 2.0 parts by weight or less in consideration of fiber manufacturing properties such as winding and forming of layered fibers.

Furthermore, in the second and fourth detailed examples, the polyoxyalkylene fatty acid ester may be included in an amount of 0.05 parts by weight or more based on 100 parts by weight of the cellulose-based fibers to raise lubricity, the fiber-bundle-collecting property, and strength-maintaining rate, and it may be included in an amount of 2.0 parts by weight or less in consideration of fiber manufacturing properties such as winding and forming of layered fibers.

Particularly, in the second and fourth detailed examples, as the content of the oxyalkylene units increases, the hydrophilic property of the polyoxyalkylene fatty acid ester increases and the adhesion to the cellulose-based fiber is improved. However, it is preferable that the polyoxyalkylene fatty acid ester includes 4 to 30 moles of oxyalkylene units, and the oxyalkylene units may include at least one unit selected from the group consisting of oxyethylene and oxypropylene, in consideration of lubricity, durability, and adhesion to the cellulose-based fiber.

The representative example of the polyoxyalkylene fatty acid ester is at least one selected from the group consisting of compounds represented by Chemical Formula 2 or 3. However, the following examples are only for the understanding of the present invention and the polyoxyalkylene fatty acid ester of the present invention is not limited to or by the following examples. 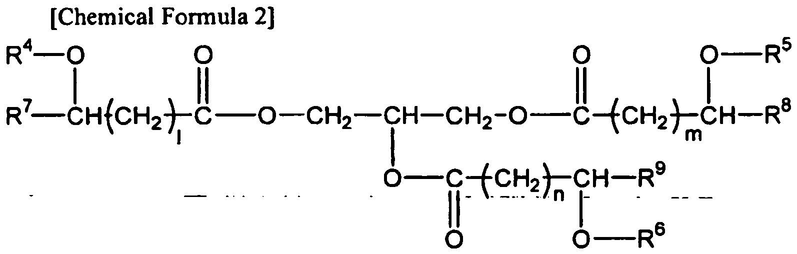 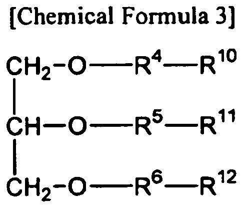 wherein:
R⁴ to R⁶ are independently polyoxyalkylene groups having 4 to 30 moles of oxyalkylene units;
R⁷ to R⁹ are independently a C₂-C₁₀ saturated or unsaturated aliphatic hydrocarbon, and they may be a C₈-C₂₀ alkyl or alkenyl;
R¹⁰ to R¹² are independently a C₈-C₂₀ saturated or unsaturated fatty acid ester; and
l, m, and n are independently an integer of 5 to 15.

In the third and fourth detailed examples, the polyoxyalkylene C₄-C₂₀ alkyl amino ether may be included in an amount of 0.005 parts by weight or more based on 100 parts by weight of the cellulose-based fibers to raise lubricity, anti-static property, and strength-maintaining rate of the yam, and it may be included in an amount of 0.2 parts by weight or less in consideration of fiber manufacturing properties such as winding and forming of layered fibers.

Particularly, the representative example of the polyoxyalkylene C₄-C₂₀ alkyl amino ether is represented by Chemical Formula 4. 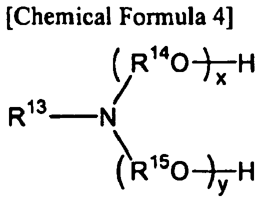 wherein:
R¹³ is a C₂-C₁₄ saturated or unsaturated aliphatic hydrocarbon;
R¹⁴ and R¹⁵ are independently ethylene or propylene;
x and y are independently an integer of 1 to 29; and
x+y equals an integer of 4 to 30.

In the fourth detailed example, the preferable example of the present invention is a cellulose-based yarn including 0.05 to 2.0 parts by weight of the di-ester compound represented by Chemical Formula 1, 0.05 to 2.0 parts by weight of the polyoxyalkylene fatty acid ester, and 0.005 to 0.2 parts by weight of the polyoxyalkylene C₄-C₂₀ alkyl amino ether based on 100 parts by weight of the cellulose based fiber, and it is more preferable that the di-ester compound represented by Chemical Formula 1 is 1,4-butandiol-di-oleate, 1,6-hexanediol-di-oleate, or a mixture thereof, the polyoxyalkylene fatty acid ester is at least one selected from the group consisting of the compounds represented by Chemical Formula 2 or 3, and the polyoxyalkylene C₄-C₂₀ alkyl amino ether is the compound represented by Chemical Formula 4.

The cellulose-based yarn according to the first to fourth detailed examples may further include a polyoxyalkylene C₄-C₂₀ alkyl ether that is used as an emulsifier in a manufacturing process of yam, as occasion demands. The polyoxyalkylene C₄-C₂₀ alkyl ether may be included in an amount of 0.01 to 0.3 parts by weight based on 100 parts by weight of the cellulose-based fibers.

The polyoxyalkylene C₄-C₂₀ alkyl ether may be a general material for common spinning oils, and more preferably the content of oxyalkylene units included therein may be 4 to 30 moles.

Furthermore, the cellulose-based yarn according to the first to fourth detailed examples may further include at least one additive selected from the group consisting of an anti-static agent and an antioxidant, as occasion demands. At this time, the additive may be included in an amount of 0.001 to 0.1 parts by weight based on 100 parts by weight of the cellulose-based fibers.

An anionic surfactant may be used as an anti-static agent of the present invention, and a common anionic surfactant such as carboxylic acid salt, sulfuric acid ester salt, sulfonic acid salt, and phosphoric acid ester salt may be used in the present invention, and more preferably phosphoric acid ester salt, sulfuric acid ester salt, or a mixture thereof may be used in the present invention.

Furthermore, a common antioxidant may be used in the present invention and it is not particularly limited.

In the first and fourth detailed examples, the cellulose-based fibers may include rayon fibers or lyocell fibers, and the lyocell fiber is more suitable for an industrial yam.

The cellulose-based yarn of the present invention is very suitable for an industrial yam, especially for a tire cord, because of the superior strength of the cellulose-based fibers and the strength-maintaining rate due to the fatty acid ester compound.

The cellulose-based yarn of the present invention may be prepared by the method including the steps of preparing a dope by mixing a cellulose, water, and N-methylmorpholine-N-oxide; spinning the dope into a precipitating bath, and then washing and drying it to form fibers; and oiling the fibers with a spinning oil before, during, or after the drying, wherein the spinning oil includes the di-ester compound represented by Chemical Formula 1, the polyoxyalkylene fatty acid ester, and the polyoxyalkylene C₄-C₂₀ alkyl amino ether.

The spinning oil of the present invention may include 100 parts by weight of the di-ester compound represented by Chemical Formula 1, 35 to 60 parts by weight of the polyoxyalkylene fatty acid ester, and 10 to 20 parts by weight of the polyoxyalkylene C₄-C₂₀ alkyl amino ether.

The di-ester compound represented by Chemical Formula 1 is a lubricant that is a main component of the spinning oil, and the polyoxyalkylene fatty acid ester functions as a lubricant, a fiber-bundle-collecting agent, and an emulsifier. Also, the polyoxyalkylene C₄-C₂₀ alkyl amino ether functions as an emulsifier and an anti-static agent in the spinning oil.

The spinning oil may further include a polyoxyalkylene C₄-C₂₀ alkyl ether, and at least one additive selected from the group consisting of an anti-static agent and an antioxidant or a mixture thereof, and more preferably includes 10 to 85 parts by weight, or 15 to 30 parts by weight of a polyoxyalkylene C₄-C₂₀ alkyl ether, and 5 to 30 parts by weight or 10 to 20 parts by weight of at least one additive selected from the group consisting of an anti-static agent and an antioxidant; or 10 to 85 parts by weight, or 15 to 30 parts by weight of a polyoxyalkylene C₄-C₂₀ alkyl ether and 5 to 30 parts by weight or 10 to 20 parts by weight of at least one additive selected from the group consisting of an anti-static agent and an antioxidant, wherein the anti-static agent may be an anionic surfactant.

Hereinafter, the present invention is described in further detail through examples.

### Example 1

Pulp having an average degree of polymerization (DPw) of 1200 and including 97% of α-cellulose was mixed with a solvent mixture of NMMO/H₂O (90/10 w/w) to prepare an 11 wt% cellulose solution.

The cellulose solution was spun with a spinning die to form cellulose filament fibers, wherein 1000 spinning nozzles were formed on the die, the diameter of the spinning nozzle was 200 µm, the length/diameter ratio of the spinning nozzles was 2, and the outer diameter of the die was 150 mm. At this time, the temperature of the spinning nozzles was maintained to 110 °C, and the discharge amount and the spinning speed were controlled so that the final total denier of the filaments was 1500.

The un-solidified filament fibers discharged from the spinning nozzles passed an air gap and a solidifying solution, wherein the temperature of the solidifying solution was 20°C, the concentration of the solidifying solution was controlled to maintain 85 wt% of water and 15 wt% of NMMO, and the upper solidifying solution and the lower solidifying solution were circulated. Lyocell filament fibers were prepared by washing out the remaining NMMO from the filament fibers having passed the solidifying solution, and drying and winding the filament fibers.

Spinning oil containing the constituent parts listed in Table 1 was introduced to the lyocell filament fibers by an oiling process during the drying process, wherein the spinning oil was used in a form of emulsion (oil content 5 wt%), and the rotating speed of the oiling roller was 20 rpm.

The number of lyocell filament fibers of the lyocell yarn prepared by the method was 1000, the average filament denier was 1.5 d, and the oil pickup units (OPU) adhered to the lyocell filament fibers were at 0.1 parts by weight based on 100 parts by weight of the filament fibers.

**[Table 1]**

| Constituent Parts | Content (Parts by weight) |
|---|---|
| 1,4-butanediol-di-oleate | 100 |
| POE (4 to 30 moles) caster oil ester | 37.5 |
| POE (4 to 30 moles) glycerine oleate | 62.5 |
| POE (2 to 20 moles) C₁₂-C₁₄ alkyl ether | 25 |
| POE (2 to 20 moles) C₁₂-C₁₄ alkyl amino ether | 12.5 |
| Alkyl sulfate salt | 5 |
| Alkyl phosphate salt | 5 |
| Antioxidant | 2.5 |

In Table 1, POE means poly(oxyethylene).

### Example 2

The lyocell yarn was prepared substantially according to the same method as in Example 1, except that the oil contents of the spinning oil emulsion was 11 wt%.

At this time, oil pickup units (OPU) adhered to the lyocell filament fibers were at 1 part by weight based on 100 parts by weight of the filament fibers.

### Example 3

The lyocell yarn was prepared substantially according to the same method as in Example 1, except that the oil contents of the spinning oil emulsion was 11 wt%, and the rotating speed of the oiling roller was 50 rpm.

At this time, oil pickup units (OPU) adhered to the lyocell filament fibers were at 2 parts by weight based on 100 parts by weight of the filament fibers.

### Example 4

The lyocell yarn was prepared substantially according to the same method as in Example 2, except that 1,4-butanediol-di-oleate was replaced by 1,4-hexanediol-di-oleate at the same content.

At this time, oil pickup units (OPU) adhered to the lyocell filament fibers were at 1 part by weight based on 100 parts by weight of the filament fibers.

### Example 5

The lyocell yarn was prepared substantially according to the same method as in Example 1, except that the oil contents of the spinning oil emulsion was 3 wt%.

At this time, oil pickup units (OPU) adhered to the lyocell filament fibers were at 0.03 parts by weight based on 100 parts by weight of the filament fibers.

### Example 6

The lyocell yarn was prepared substantially according to the same method as in Example 1, except that the oil contents of the spinning oil emulsion was 20 wt%.

At this time, oil pickup units (OPU) adhered to the lyocell filament fibers were art 3 parts by weight based-on 100 parts by weight of the-filament fibers.

The constituents of the spinning oil included in the lyocell filament yarns prepared according to Examples 1-6 were separated by the method of gel permeation chromatography (GPC), and the results are listed in Table 2. Hexane and chloroform were used in the GPC analysis.

**[Table 2]**

| | | (Unit: Wt%) | | | | |
|---|---|---|---|---|---|---|
| Constituents | Example 1 | Example 2 | Example 3 | Example 4 | Example 5 | Example 6 |
| A1 | 0.04 | 0.4 | 0.8 | - | 0.02 | 1.2 |
| A2 | - | - | - | 0.4 | - | - |
| B | 0.015 | 0.15 | 0.3 | 0.15 | 0.0075 | 0.45 |
| C | 0.025 | 0.25 | 0.5 | 0.25 | 0.0125 | 0.75 |
| D | 0.01 | 0.1 | 0.2 | 0.1 | 0.005 | 0.3 |
| E | 0.005 | 0.05 | 0.1 | 0.05 | 0.0025 | 0.15 |
| F | 0.002 | 0.02 | 0.04 | 0.02 | 0.001 | 0.06 |
| G | 0.002 | 0.02 | 0.04 | 0.02 | 0.001 | 0.06 |
| H | 0.001 | 0.01 | 0.02 | 0.01 | 0.0005 | 0.03 |

In Table 2,
Constituent A1: 1,4-butanediol-di-oleate,
Constituent A2: 1,4-hexanediol-di-olate,
Constituent B: POE (4 to 30 moles) caster oil ester,
Constituent C: POE (4 to 30 moles) glycerine oleate,
Constituent D: POE (2 to 20 moles) C₁₂-C₁₄ alkyl ether,
Constituent E: POE (2 to 20 moles) C₁₂-C₁₄ alkyl amino ether,
Constituent F: Alkyl sulfate salt,
Constituent G: Alkyl phosphate salt, and
Constituent H: Antioxidant.

The spinning properties and oil properties of the lyocell yarns prepared according to Examples 1-6 were evaluated by the following methods, and the results are listed in Table 3.
* Oil Pickup Units (%): calculate the weight parts of the extracted spinning oil per 100 weight part of the lyocell filament fibers.
* Dynamic Friction Coefficient: fiber/metal (F/M) friction coefficient, fiber/fiber (F/F) friction coefficient, and fiber/ceramic (F/C) friction coefficient were tested by a friction tester (YF-850, Toray) under the conditions of room temperature, 1.5 Kg of initial tension, and 100 m/min of fiber driving speed.
* Electrostatic Charge: Friction Electric Charge (KV) of the fibers running with the speed of 100 m/min was tested by a current collecting multimeter, and the result was evaluated by the following standards.
○: Tribo-charge 0∼1KV; Δ: Tribo-charge 1∼2KV; ×: Tribo-charge 3KV or more
* Hairiness: the number of hairs per 2000m of the yarn was counted and the result was evaluated by the following standards.
○: 0-10 hairs; Δ: 11-20 hairs; ×: 21 or more hairs
* Strength of the oil slick: tested by Rulling tester by crossing two yarns with each other and repeatedly chafing the two yarns, and then counting the number of chafing strokes until breakage occurs.

**[Table 31**

| | Example 1 | Example 2 | Example 3 | Example 4 | Example 5 | Example 6 |
|---|---|---|---|---|---|---|
| OPU | 0.1 | 1.0 | 2.0 | 1.0 | 0.05 | 3.0 |
| DFC(F/M) | 0.238 | 0.250 | 0.258 | 0.248 | 0.240 | 0.270 |
| DFC (F/F) | 0.119 | 0.096 | 0.105 | 0.1 | 0.125 | 0.110 |
| DFC (F/C) | 0.237 | 0.360 | 0.371 | 0.365 | 0.320 | 0.375 |
| EC | Δ | ○ | ○ | ○ | × | Δ |
| Hairiness | Δ | ○ | Δ | ○ | × | × |
| SOS | 40 | 45 | 48 | 47 | 20 | 38 |

wherein OPU is oil pickup units, DFC is dynamic friction coefficient, EC is electrostatic charge, and SOS is strength of the oil slick.

It may be known from the above Tables 2 and 3 that the lyocell yarns have a low dynamic friction coefficient. Furthermore, the yarns containing the spinning oil with the preferable OPU (i.e. Examples 1-4) have lower electrostatic charge, fewer hairs, and a superior strength of the oil slick.

### Examples 7 -12

Three kinds of lyocell tire cord having three different TPM rates as per Examples 1-6 were prepared by firstly twisting the lyocell yarns prepared by Examples 1-6 with 350 TPM, 420 TPM, and 470 TPM respectively, and secondly twisting 2 ply of the twisted yarns with the same TPM as the first twisting to make raw cords of 3000 denier.

The raw cords were dipped into an RFL adhesive solution containing resorcinol, formaldehyde, sodium hydroxide, styrene/butadiene/vinylpyridine (15/70/15) rubber, and water so that the pickup rate of the adhesive was 5 wt%, and then the cords were dried for 2 minutes at 150°C and heat treated for 2 minutes at 240 °C .

## Claims

1. A cellulose-based yarn comprising:
cellulose-based fibers; and a di-ester compound represented by Chemical Formula 1, wherein the di-ester compound is attached to the surface of the cellulose-based fibers, 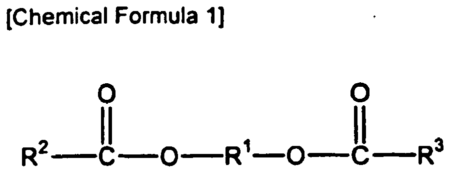 wherein R¹ is a C₂-C₁₄ saturated or unsaturated aliphatic hydrocarbon, and R² and R³ are independently a C₈-C₂₀ saturated or unsaturated aliphatic hydrocarbon.

2. The cellulose-based yarn according to Claim 1, further comprising a polyoxyalkylene fatty acid ester.

3. The cellulose-based yarn according to Claim 1, further comprising a polyoxyalkylene C₄-C₂₀ alkyl amino ether.

4. The cellulose-based yarn according to Claim 1, comprising the cellulose-based fibers;
the di-ester compound represented by Chemical Formula 1;
an polyoxyalkylene fatty acid ester; and
an polyoxyalkylene C₄-C₂₀ alkyl amino ether.

5. The cellulose-based yarn according to Claim 1 or Claim 4, wherein the di-ester compound represented by Chemical Formula 1 is comprised in an amount of from 0.05 to 2.0 parts by weight based on 100 parts by weight of the cellulose-based fibers.

6. The cellulose-based yarn according to Claim 2 or Claim 4, wherein the polyoxyalkylene fatty acid ester is comprised in an amount of from 0.05 to 2.0 parts by weight based on 100 parts by weight of the cellulose-based fibers.

7. The cellulose-based yarn according to Claim 2 or Claim 4, wherein the polyoxyalkylene fatty acid ester comprises 4 to 30 moles of oxyalkylene units.

8. The cellulose-based yarn according to Claim 7, wherein the oxyalkylene units comprise at least one unit selected from the group consisting of oxyethylene and oxypropylene.

9. The cellulose-based yarn according to Claim 2 or Claim 4, wherein the polyoxyalkylene fatty acid ester is at least one selected from the group consisting of compounds represented by Chemical Formula 2 or 3: 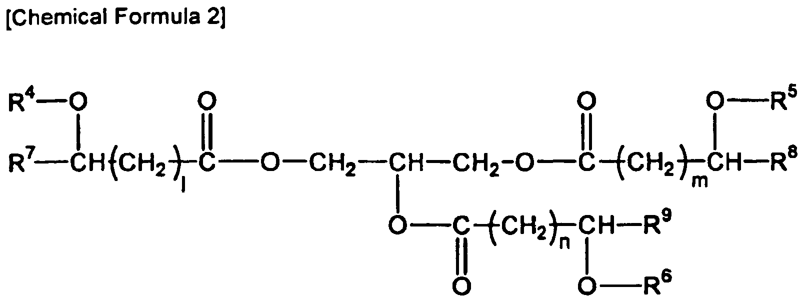 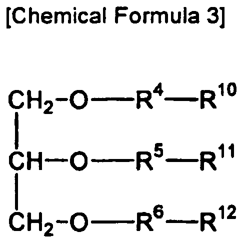 wherein
R⁴ to R⁶ are independently a polyoxyalkylene group having 4 to 30 moles of oxyalkylene units;
R⁷ to R⁹ are independently a C₂-C₁₀ saturated or unsaturated aliphatic hydrocarbon;
R¹⁰ to R¹² are independently a C₈-C₂₀ saturated or unsaturated fatty acid ester; and
l, m, and n are independently an integer of 5 to 15.

10. The cellulose-based yarn according to Claim 3 or Claim 4, wherein the polyoxyalkylene C₄-C₂₀ alkyl amino ether is comprised in an amount of from 0.005 to 0.2 parts by weight based on 100 parts by weight of the cellulose-based fibers.

11. The cellulose-based yarn according to Claim 3 or Claim 4, wherein the polyoxyalkylene C₄-C₂₀ alkyl amino ether is represented by Chemical Formula 4: 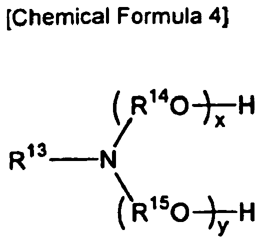 wherein R¹³ is a C₂-C₁₄ saturated or unsaturated aliphatic hydrocarbon;
R¹⁴ and R¹⁵ are independently ethylene or propylene;
x and y are independently an integer of 1 to 29; and
x+y equals an integer of 4 to 30.

12. The cellulose-based yarn according to any one of Claim 1 to Claim 4, further comprising 0.01 to 0.3 parts by weight of an polyoxyalkylene C₄-C₂₀ alkyl ether based on 100 parts by weight of the cellulose-based fibers.

13. The cellulose-based yarn according to any one of Claim 1 to Claim 4, further comprising 0.001 to 0.1 parts by weight of at least one additive selected from the group consisting of an anti-static agent and an antioxidant based on 100 parts by weight of the cellulose-based fibers.

14. The cellulose-based yarn according to Claim 4, comprising 100 parts by weight of the cellulose based fiber;
0.05 to 2.0 parts by weight of the di-ester compound represented by Chemical Formula 1;
0.05 to 2.0 parts by weight of the polyoxyalkylene fatty acid ester; and
0.005 to 0.2 parts by weight of the polyoxyalkylene C₄-C₂₀ alkyl amino ether.

15. The cellulose-based yarn according to Claim 14,
wherein the di-ester compound represented by Chemical Formula 1 is 1,4-butandiol-di-oleate, 1,6-hexanediol-di-oleate, or a mixture thereof,
the polyoxyalkylene fatty acid ester is at least one selected from the group consisting of compounds represented by Chemical Formula 2 or 3, and
the polyoxyalkylene C₄-C₂₀ alkyl amino ether is a compound represented by Chemical Formula 4: 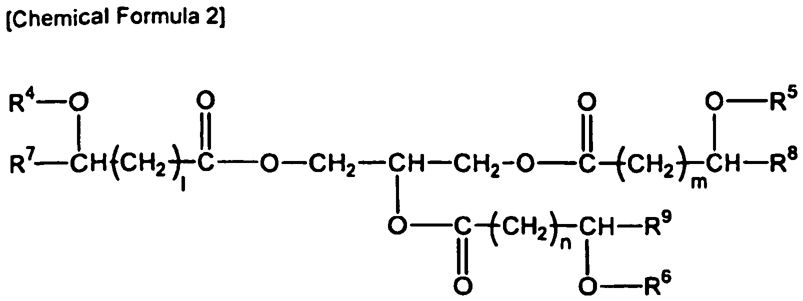 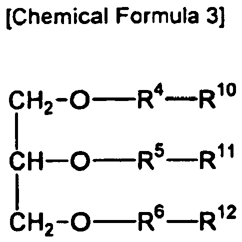 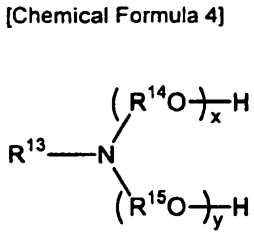 wherein
R⁴ to R⁶ are independently a polyoxyalkylene group having 4 to 30 moles of oxyalkylene units;
R⁷ to R⁹ are independently a C₂-C₁₀ saturated or unsaturated aliphatic hydrocarbon;
R¹⁰ to R¹² are independently a C₈-C₂₀ saturated or unsaturated fatty acid ester;
R¹³ is a C₂-C₁₄ saturated or unsaturated aliphatic hydrocarbon;
R¹⁴ and R¹⁵ are independently ethylene or propylene;
l, m, and n are independently an integer of 5 to 15.
x and y are independently an integer of 1 to 29; and
x+y equals an integer of 4 to 30.

16. The cellulose-based yarn according to Claim 14, further comprising:
0.01 to 0.3 parts by weight of an polyoxyalkylene C₄-C₂₀ alkyl ether;
0.001 to 0.1 parts by weight of at least one additive selected from the group consisting of an anti-static agent and an antioxidant; or
0.01 to 0.3 parts by weight of an polyoxyalkylene C₄-C₂₀ alkyl ether and 0.001 to 0.1 parts by weight of at least one additive selected from the group consisting of an anti-static agent and an antioxidant,
based on 100 parts by weight of the cellulose-based fibers.

17. The cellulose-based yarn according to any one of Claims 1 to 4, wherein the cellulose-based fibers comprise lyocell fibers.

18. The cellulose-based yarn according to any one of Claims 1 to 4, wherein the cellulose based yarn is a yarn for a tire cord.

19. A method of preparing a cellulose-based yarn, comprising the steps of:
preparing a dope by mixing a cellulose, water, and N-methylmorpholine-N-oxide;
spinning the dope into a precipitating bath, and then washing, drying, and stretching it to form fiber; and
oiling the fiber with a spinning oil before, during, or after the stretching,
wherein the spinning oil comprises 100 parts by weight of a di-ester compound represented by Chemical Formula 1, 35 to 60 parts by weight of an polyoxyalkylene fatty acid ester, and 10 to 20 parts by weight of an polyoxyalkylene C₄-C₂₀ alkyl amino ether, 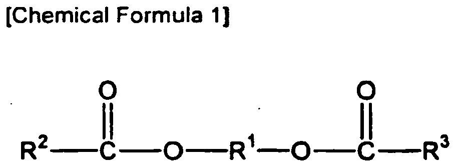
wherein R¹ is a C₂-C₁₄ saturated or unsaturated aliphatic hydrocarbon, and R² and R³ are independently a C₈-C₂₀ saturated or unsaturated aliphatic hydrocarbon.

20. The method according to Claim 19, wherein the spinning oil further comprises:
10 to 85 parts by weight of an polyoxyalkylene C₄-C₂₀ alkyl ether;
5 to 30 parts by weight of at least one additive selected from the group consisting of an anti-static agent and an antioxidant; or
10 to 85 parts by weight of an polyoxyalkylene C₄-C₂₀ alkyl ether and 5 to 30 parts by weight of at least one additive selected from the group consisting of an anti-static agent and an antioxidant.

## Patentansprüche

1. Garn auf Cellulusobasis, umfassend:
Fasern auf Cellulosebasis; und eine Diesterverbindung der chemischen Formel 1, wobei die Diesterverbindung an der Oberfläche der Fasern auf Cellulosebasis haftet, 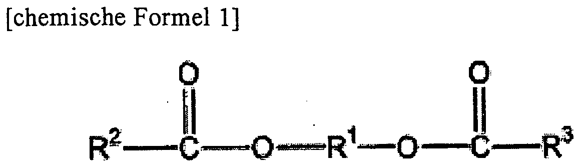
worin R¹ ein gesättigter oder ungesättigter aliphatischer C₂-C₁₄-Kohlenwasserstoff ist, und R² und R³ unabhängig voneinander ein gesättigter oder ungesättigter aliphatischer C₈-C₂₀-Kohlenwasserstoff sind.

2. Garn auf Cellulosebasis nach Anspruch 1, umfassend weiterhin einen Polyoxyalkylenfettsäureester.

3. Garn auf Cellulosebasis nach Anspruch 1, umfassend weiterhin einen Polyoxyalkylen-C₄-C₂₀-alkylaminoether.

4. Garn auf Cellulosebasis nach Anspruch 1, umfassend
die Fasern auf Cellulosebasis;
die Diesterverbindung der chemischen Formel 1;
einen Polyoxyalkylenfettsäureester; und
einen Polyoxyalkylen-C₄-C₂₀-alkylaminoether.

5. Garn auf Cellulosebasis nach Anspruch 1 oder Anspruch 4, wobei die durch die chemische Formel 1 wiedergegebene Diesterverbindung in einer Menge von 0,05 bis 2,0 Gewichtsteilen, basierend auf 100 Gewichtsteilen der Fasern auf Cellulosebasis, umfasst ist.

6. Garn auf Cellulosebasis nach Anspruch 2 oder Anspruch 4, wobei der Polyoxyalkylenfettsäureester in einer Menge von 0,05 bis 2,0 Gewichtsteilen, basierend auf 100 Gewichtsteilen der Fasern auf Cellulosebasis, umfasst ist.

7. Garn auf Cellulosebasis nach Anspruch 2 oder Anspruch 4, wobei der Polyoxyalkylenfettsäureester 4 bis 30 Mole Oxyalkyleneinheiten umfasst.

8. Garn auf Cellulosebasis nach Anspruch 7, wobei die Oxyalkyleneinheiten mindestens eine Einheit umfassen, gewählt aus der Gruppe, bestehend aus Oxyethylen und Oxypropylen.

9. Garn auf Cellulosebasis nach Anspruch 2 oder Anspruch 4, wobei der Polyoxyalkylenfettsäureester mindestens einer ist, gewählt aus der Gruppe, bestehend aus Verbindungen der chemischen Formel 2 oder 3: 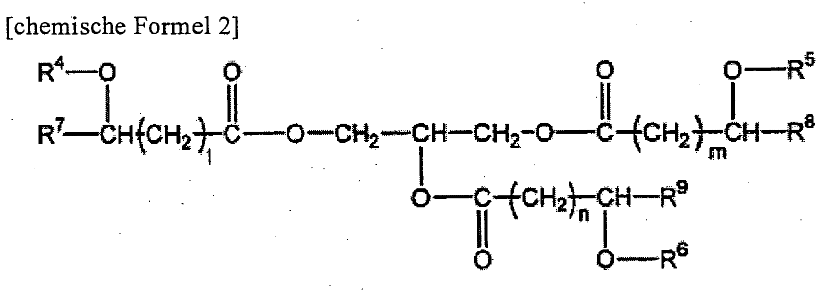 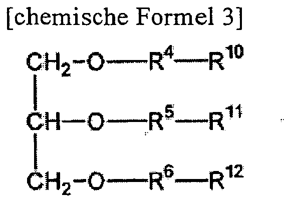 worin
R⁴ bis R⁶ unabhängig voneinander eine Polyoxyalkylengruppe mit 4 bis 30 Molen Oxyalkyleneinheiten sind;
R⁷ bis R⁹ unabhängig voneinander ein gesättigter oder ungesättigter, aliphatischer C₂-C₁₀-Kohlenwasserstoff sind;
R¹⁰ bis R¹² unabhängig voneinander ein gesättigter oder ungesättigter C₈-C₂₀-Fettsäureester sind; und
1, m und n unabhängig voneinander eine ganze Zahl von 5 bis 15 sind.

10. Garn auf Cellulosebasis nach Anspruch 3 oder Anspruch 4, wobei der Polyoxyalkylen-C₄-C₂₀-alkylaminoether in einer Menge von 0,005 bis 0,02 Gewichtsteilen, bezogen auf 100 Gewichtsteile der Fasern auf Cellulosebasis, umfasst ist.

11. Garn auf Cellulosebasis nach Anspruch 3 oder Anspruch 4, wobei der Polyoxylaklylen-C₄-C₂₀-alkylaminoether durch die chemische Formel 4 wiedergegeben ist: 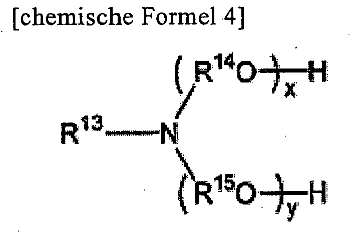 worin R¹³ ein gesättigter oder ungesättigter, aliphatischer C₂-C₁₄-Kohlenwasserstoff ist;
R¹⁴ und R¹⁵ unabhängig voneinander Ethylen oder Propylen sind;
x und y unabhängig voneinander eine ganze Zahl von 1 bis 29 sind; und
x+y einer ganzen Zahl von 4 bis 30 entspricht.

12. Garn auf Cellulosebasis nach mindestens einem der Ansprüche 1 bis 4, umfassend weiterhin 0,01 bis 0,3 Gewichtsteile eines Polyoxyalkylen-C₄-C₂₀-alkylethers, bezogen auf 100 Gewichtsteile der Fasern auf Cellulosebasis.

13. Garn auf Cellulosebasis nach mindestens einem der Ansprüche 1 bis 4, umfassend weiterhin 0,001 bis 0,1 Gewichtsteile mindestens eines Additivs, gewählt aus der Gruppe, bestehend aus einem antistatischen Mittel und einem Antioxidans, bezogen auf 100 Gewichtsteile der Fasern auf Cellulosebasis.

14. Garn auf Cellulosebasis nach Anspruch 4, umfassend
100 Gewichtsteile der Faser auf Cellulosebasis;
0,05 bis 2,0 Gewichtsteile der durch die chemische Formel 1 wiedergegebenen Diesterverbindung;
0,05 bis 2,0 Gewichtsteile des Polyoxyalkylenfettsäureesters; und
0,005 bis 0,2 Gewichtsteile des Polyoxyalkylen-C₄-C₂₀-alkylaminoethers.

15. Garn auf Cellulosebasis nach Anspruch 14,
wobei die durch die chemische Formel 1 wiedergegebene Diesterverbindung 1,4-Butandiol-dioleat, 1,6-Hexandiol-dioleat oder eine Mischung davon ist,
der Polyoxyalkylenfettsäureester mindestens einer ist, gewählt aus der Gruppe, bestehend aus Verbindungen der chemischen Formel 2 oder 3, und
der Polyoxyalkylen-C₄-C₂₀-alkylaminoether eine durch die chemische Formel 4 wiedergegebene Formel ist: 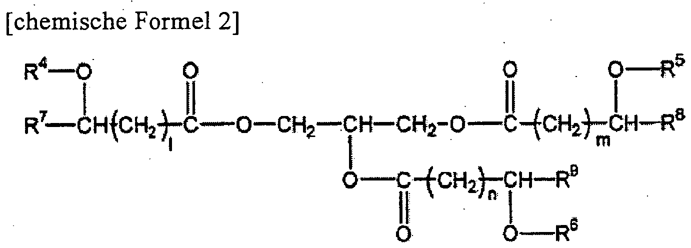 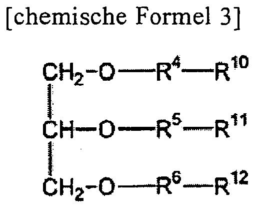 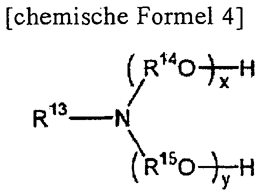 worin
R⁴ bis R⁶ unabhängig voneinander eine Polyoxyalkylengruppe mit 4 bis 30 Molen Oxyalkyleneinheiten sind;
R⁷ bis R⁹ unabhängig voneinander ein gesättigter oder ungesättigter, aliphatischer C₂-C₁₀-Kohlenwasserstoff sind;
R¹⁰ bis R¹² unabhängig voneinander ein gesättigter oder ungesättigter C₈-C₂₀-Fettsäureester sind;
R¹³ ein gesättigter oder ungesättigter, aliphatischer C₂-C₁₄-Kohlenwasserstoff ist; R¹⁴ und R¹⁵ unabhängig voneinander Ethylen oder Propylen sind;
l, m und n unabhängig voneinander eine ganze Zahl von 5 bis 15 sind,
x und y unabhängig voneinander eine ganze Zahl von 1 bis 29 sind; und
x+y einer ganzen Zahl von 4 bis 30 entspricht.

16. Garn auf Cellulosebasis nach Anspruch 14, umfassend weiterhin: 0,01 bis 0,3 Gewichtsteile eines Polyoxyalkylen-C₄-C₂₀-alkylethers;
0,001 bis 0,1 Gewichtsteile mindestens eines Additivs, gewählt aus der Gruppe, bestehend aus einem antistatischen Mittel und einem Antioxidans; oder
0,01 bis 0,3 Gewichtsteile eines Polyoxyalkylen-C₄-C₂₀-alkylethers und 0,001 bis 0,1 Gewichtsteile mindestens eines Additivs, gewählt aus der Gruppe, bestehend aus einem antistatischen Mittel und einem Antioxidans,
bezogen auf 100 Gewichtsteile der Fasern auf Cellulosebasis.

17. Garn auf Cellulosebasis nach mindestens einem der Ansprüche 1 bis 4, wobei die Fasern auf Cellulosebasis Lyocellfasern umfassen.

18. Garn auf Cellulosebasis nach mindestens einem der Ansprüche 1 bis 4, wobei das Garn auf Cellulosebasis ein Garn für einen Reifenkord ist.

19. Verfahren zur Herstellung eines Garns auf Cellulosebasis, umfassend die Schritte:
Herstellen einer Spinnlösung durch Mischen einer Cellulose, Wasser und N-Methylmopholin-N-oxid;
Spinnen der Spinnlösung in ein Ausfällungsbad, und danach Waschen, Trocknen und
Recken dieser zur Bildung von Faser; und
Ölen der Faser mit einem Spinnöl vor, während oder nach dem Recken,
wobei das Spinnöl 100 Gewichtsteile einer durch die chemische Formel 1 wiedergegebenen Diesterverbindung, 35 bis 60 Gewichtsteile eines Polyoxyalkylenfettsäureesters und 10 bis 20 Gewichtsteile eines Polyoxyalkylen-C₄-C₂₀-alkylaminoethers umfasst, 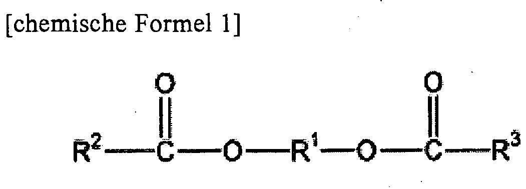
worin R¹ ein gesättigter oder ungesättigter aliphatischer C₂-C₁₄-Kohlenwasserstoff ist, und R² und R³ unabhängig voneinander ein gesättigter oder ungesättigter aliphatischer C₈-C₂₀-Kohlenwasserstoff sind.

20. Verfahren nach Anspruch 19, wobei das Spinnöl weiterhin umfasst:
10 bis 85 Gewichtsteile eines Polyoxyalkylen-C₄-C₂₀-alkylethers;
5 bis 30 Gewichtsteile mindestens eines Additivs, gewählt aus der Gruppe, bestehend aus einem antistatischen Mittel und einem Antioxidans; oder
10 bis 85 Gewichtsteile eines Polyoxyalkylen-C₄-C₂₀-alkylethers und 5 bis 30 Gewichtsteile mindestens eines Additivs, gewählt aus der Gruppe, bestehend aus einem antistatischen Mittel und einem Antioxidans.

## Revendications

1. Fil à base de cellulose comprenant :
des fibres à base de cellulose ; et un composé diester représenté par la formule chimique 1, dans lequel le composé diester est attaché à la surface des fibres à base de cellulose, 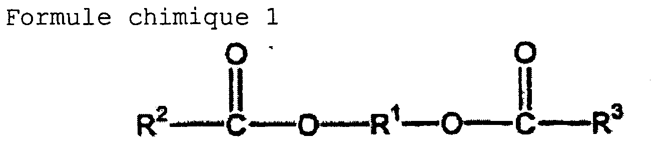
dans laquelle R¹ est un hydrocarbure aliphatique saturé ou insaturé en C₂-C₁₄, et R² et R³ sont indépendamment un hydrocarbure aliphatique saturé ou insaturé en C₈-C₂₀.

2. Fil à base de cellulose selon la revendication 1, comprenant en outre un ester d'acide gras de polyoxyalkylène.

3. Fil à base de cellulose selon la revendication 1, comprenant en outre un aminoéther d'alkyle en C₄-C₂₀ de polyoxyalkylène.

4. Fil à base de cellulose selon la revendication 1, comprenant
les fibres à base de cellulose ;
le composé diester représenté par la formule chimique 1 ;
un ester d'acide gras de polyoxyalkylène ; et
un aminoéther d'alkyle en C₄-C₂₀ de polyoxyalkylène.

5. Fil à base de cellulose selon la revendication 1 ou la revendication 4, dans lequel le composé diester représenté par la formule chimique 1 est compris à raison de 0,05 à 2,0 parties en poids sur la base de 100 parties en poids des fibres à base de cellulose.

6. Fil à base de cellulose selon la revendication 2 ou la revendication 4, dans lequel l'ester d'acide gras de polyoxyalkylène est compris à raison de 0,05 à 2,0 parties en poids sur la base de 100 parties en poids des fibres à base de cellulose.

7. Fil à base de cellulose selon la revendication 2 ou la revendication 4, dans lequel l'ester d'acide gras de polyoxyalkylène comprend de 4 à 30 moles de motifs oxyalkylène.

8. Fil à base de cellulose selon la revendication 7, dans lequel les motifs oxyalkylène comprennent au moins un motif choisi dans le groupe constitué par l'oxyéthylène et l'oxypropylène.

9. Fil à base de cellulose selon la revendication 2 ou la revendication 4, dans lequel l'ester d'acide gras de polyoxyalkylène est au moins choisi dans le groupe constitué par les composés représentés par la formule chimique 2 ou 3 : 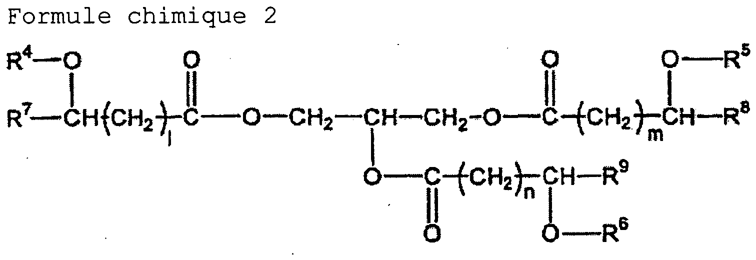 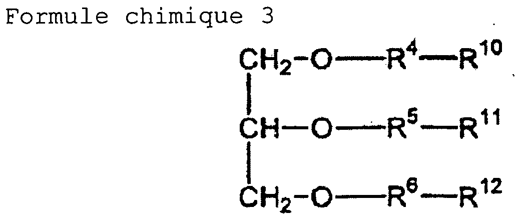 dans lesquelles
R⁴ à R⁶ sont indépendamment un groupe polyoxyalkylène comprenant de 4 à 30 moles de motifs oxyalkylène ;
R⁷ à R⁹ sont indépendamment un hydrocarbure aliphatique saturé ou insaturé en C₂-C₁₀;
R¹⁰ à R¹² sont indépendamment un ester d'acide gras saturé ou insaturé en C₈-C₂₀ ; et
1, m, et n sont indépendamment un nombre entier de 5 à 15.

10. Fil à base de cellulose selon la revendication 3 ou la revendication 4, dans lequel l'aminoéther d'alkyle en C₄-C₂₀ de polyoxyalkylène est compris à raison de 0,005 à 0,2 parties en poids sur la base de 100 parties en poids des fibres à base de cellulose.

11. Fil à base de cellulose selon la revendication 3 ou la revendication 4, dans lequel l'aminoéther d'alkyle en C₄-C₂₀ de polyoxyalkylène est représenté par la formule chimique 4 : 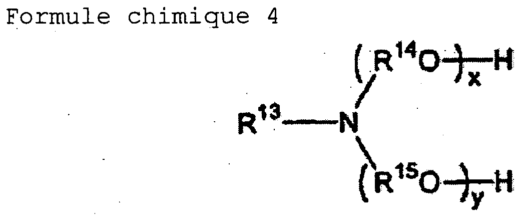 dans laquelle R¹³ est un hydrocarbure aliphatique saturé ou insaturé en C₂-C₁₄ ;
R¹⁹ et R¹⁵ sont indépendamment un groupe éthylène ou propylène ;
x et y sont indépendamment un nombre entier de 1 à 29 ; et
x+y est égal à un nombre entier de 4 à 30.

12. Fil à base de cellulose selon l'une quelconque des revendications 1 à 4, comprenant en outre de 0,01 à 0,3 parties en poids d'un éther d'alkyle en C₄-C₂₀ de polyoxyalkylène sur la base de 100 parties en poids des fibres à base de cellulose.

13. Fil à base de cellulose selon l'une quelconque des revendications 1 à 4, comprenant en outre de 0,0001 à 0,1 partie en poids d'au moins un additif choisi dans le groupe constitué par un agent antistatique et un antioxydant sur la base de 100 parties en poids des fibres à base de cellulose.

14. Fil à base de cellulose selon la revendication 4, comprenant
100 parties en poids de la fibre à base de cellulose ; de 0,05 à 2,0 parties en poids du composé diester représenté par la formule chimique 1 ;
de 0,05 à 2,0 parties en poids de l'ester d'acide gras de polyoxyalkylène ; et
de 0,005 à 0,2 partie en poids de l'aminoéther d'alkyle en C₄-C₂₀ de polyoxyalkylène.

15. Fil à base de cellulose selon la revendication 14, dans lequel le composé diester représenté par la formule chimique 1 est le dioléate de 1,4-butanediol, le dioléate de 1,6-hexanédiol, ou un mélange de ceux-ci,
l'ester d'acide gras de polyoxyalkylène est au moins un ester choisi dans le groupe constitué par les composés représentés par la formule chimique 2 ou 3, et
l'aminoéther d'alkyle en C₄-C₂₀ de polyoxyalkylène est un composé représenté par la formule chimique 4 : 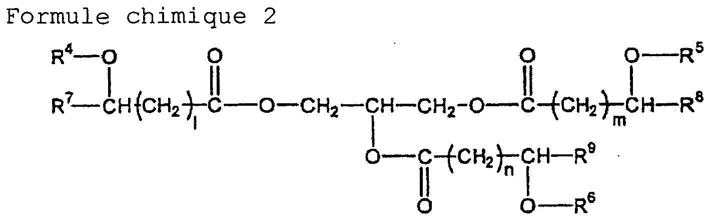 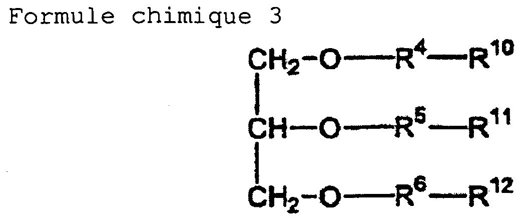 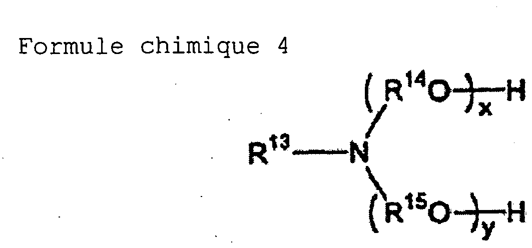 dans lesquelles
R⁴ à R⁶ sont indépendamment un groupe polyoxyalkylène comprenant de 4 à 30 moles de motifs oxyalkylène ;
R⁷ à R⁹ sont indépendamment un hydrocarbure aliphatique saturé ou insaturé en C₂-C₁₀ ;
R¹⁰ à R¹² sont indépendamment un ester d'acide gras saturé ou insaturé en C₈-C₂₀ ;
R¹³ est un hydrocarbure aliphatique saturé ou insaturé en C₂-C₁₄ ;
R¹⁴ et R¹⁵ sont indépendamment un groupe éthylène ou propylène ;
l, m, et n sont indépendamment un nombre entier de 5 à 15 ;
x et y sont indépendamment un nombre entier de 1 à 29 ; et
x+y est égal à un nombre entier de 4 à 30.

16. Fil à base de cellulose selon la revendication 14, comprenant en outre :
de 0,01 à 0,3 partie en poids d'éther d'alkyle en C₄-C₂₀ de polyoxyalkylène ;
de 0,001 à 0,1 partie en poids d'au moins un additif choisi dans le groupe constitué par un agent antistatique et un antioxydant ; ou
de 0,01 à 0,3 partie en poids d'un éther d'alkyle en C₄-C₂₀ de polyoxyalkylène et 0,001 à 0,1 partie en poids d'au moins un additif choisi dans le groupe constitué par un agent antistatique et un antioxydant, sur la base de 100 parties en poids des fibres à base de cellulose.

17. Fil à base de cellulose selon l'une quelconque des revendications 1 à 4, dans lequel les fibres à base de cellulose comprennent des fibres lyocell.

18. Fil à base de cellulose selon l'une quelconque des revendications 1 à 4, dans lequel le fil à base de cellulose est un fil pour un câble pour pneu.

19. Procédé de préparation d'un fil à base de cellulose, comprenant les étapes de :
préparation d'une solution à filer par mélange d'une cellulose, d'eau et de N-méthylmorpholine-N-oxyde ;
filage de la solution à filer dans un bain de précipitation, puis lavage, séchage et étirage pour former une fibre ; et
ensimage de la fibre avec une huile d'ensimage avant, pendant ou après l'étirage,
dans lequel l'huile d'ensimage comprend 100 parties en poids d'un composé diester représenté par la formule chimique 1, de 35 à 60 parties en poids d'un ester d'acide gras de polyoxyalkylène, et de 10 à 20 parties en poids d'un aminoéther d'alkyle en C₄-C₂₀ de polyoxyalkylène, 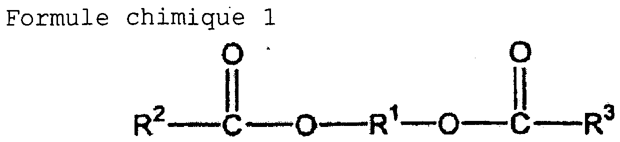
dans laquelle R¹ est un hydrocarbure aliphatique saturé ou insaturé en C₂-C₁₄, et R² et R³ sont indépendamment un hydrocarbure aliphatique saturé ou insaturé en C₈-C₂₀.

20. Procédé selon la revendication 19, dans lequel l'huile d'ensimage comprend en outre :
de 10 à 85 parties en poids d'un éther d'alkyle en C₄-C₂₀ de polyoxyalkylène ;
de 5 à 30 parties en poids d'au moins un additif choisi dans le groupe constitué par un agent antistatique et un antioxydant ; ou
de 10 à 85 parties en poids d'un éther d'alkyle en C₄-C₂₀ de polyoxyalkylène et de 5 à 30 parties en poids d'au moins un additif choisi dans le groupe constitué par un agent antistatique et un antioxydant.
